# EUROPEAN PATENT APPLICATION

(11) **EP 4 576 260 A1**
(43) Date of publication of application: **25.06.2025**
(21) Application number: 23878922.6
(22) Date of filing: 25.09.2023
(51) Int. Cl.: H01M 4/525, H01M 4/04

(54) **LITHIUM-NICKEL COMPOSITE OXIDE POSITIVE ELECTRODE MATERIAL AND PREPARATION METHOD THEREFOR**

(30) Priority: 21.10.2022 CN 202211296569
(71) Applicant: BASF Shanshan Battery Materials Co., Ltd., Changsha, Hunan 410205 (CN)
(72) Inventor: SHE, Jiaxin, Changsha, Hunan 410205 (CN); TAN, Xinxin, Changsha, Hunan 410205 (CN); LUO, Gui, Changsha, Hunan 410205 (CN); WANG, Meng, Changsha, Hunan 410205 (CN); DUAN, Hui, Changsha, Hunan 410205 (CN)
(74) Representative: Biggi, Cristina
(86) International application number: PCT/CN2023/121069
(87) International publication number: WO 2024/082929

(57) **Abstract**

A lithium nickel composite oxide cathode material, wherein under observation of a cross section thereof through scanning electron microscopy, the cross section of the lithium nickel composite oxide cathode material is divided into four equal parts according to the radial length, a porosity of each part of the cross section as measured is in a range from 3% to 8%, and a total porosity of the cross section is in a range from 3% to 8%. A preparation method thereof includes mixing a hydroxide of nickel, cobalt, and manganese with a sulfate containing M and multi-period, low-temperature pre-sintering to obtain a pre-sintered precursor; mixing a lithium source with the pre-sintered precursor and high-temperature sintering to obtain a first sintered matrix; washing the first sintered matrix with deionized water, drying, then mixing with a coating agent and sintering to obtain the lithium nickel composite oxide cathode material. Abundant, uniform-sized pores are distributed evenly in the lithium nickel composite oxide cathode material, which is beneficial for the infiltration of electrolyte, ensuring full contact between the cathode material and the electrolyte, shortening the lithium ion transport path, improving discharge capacity of the cathode material, reducing the internal resistance of the lithium battery, and enhancing rate performance of the lithium battery.

## Description

### TECHNICAL FIELD

The present application relates to lithium-ion battery cathode materials, particularly to a lithium nickel composite oxide cathode material with abundant and uniformly distributed pores within the material and a preparation method thereof.

### BACKGROUND

In recent years, lithium-ion batteries have undergone rapid development and have been widely used in mobile electronic devices and the automotive manufacturing field. In particular, the rapid expansion of the new-energy vehicle industry has significantly increased the market demand for lithium-ion batteries, and brought requirements on lithium-ion batteries in terms of high energy density, long service life, low cost, high safety, and environmental friendliness. Among the various existing battery materials, high-nickel ternary lithium-ion cathode materials have exhibited notable advantages, emerging as a key research focus.

With increasing consumer demand for long-lasting and fast-charging lithium-ion batteries, batteries are required to have higher energy density and better rate performance. From the perspective of cathode materials, the most effective way to increase energy density is to increase the nickel content in the material. However, this increase in nickel content may lead to a rapid degradation of battery stability, resulting in serious safety issues. Whereas porous precursors or surface coatings are often adopted to improve rate performance, the porous precursors may suffer from a reduction in porosity or uneven pore distribution after sintering. The uneven pore distribution could cause anisotropic stress within the material during charge and discharge processes, ultimately leading to particle breakage and a rapid deterioration in electrical performance. On the other hand, as a common method to enhance rate performance, surface coating with fast-ion conductors often leads to a reduction in capacity. While cathode materials with high energy density and good rate performance are current research priorities in the industry, existing modification methods face significant challenges in simultaneously enhance both capacity and rate performance of cathode materials.

### SUMMARY

The technical problem to be solved by the present application is to overcome the deficiencies and shortcomings mentioned in the background and provide a lithium nickel composite oxide cathode material with high discharge capacity and excellent rate performance, and a preparation method thereof.

To solve the above technical problem, the technical solution provided by the present application is as follows:

A lithium nickel composite oxide cathode material, wherein under observation of a cross section thereof through scanning electron microscopy, the cross section of the lithium nickel composite oxide cathode material is divided into four equal parts according to the radial length, a porosity of each part of the cross section as measured is in a range from 3% to 8%, pores are uniformly distributed from inside to outside of the particle, and a total porosity of the cross section is in a range from 3% to 8%.

A method for measuring the porosity of the lithium nickel composite oxide cathode material is as follows: The particle of the cathode material is cut using an ion beam polisher (CP), obtaining a sample with an observable cross-section of the particle. The image of the cross-section is captured using a scanning electron microscope (SEM). The pore regions of the particle are extracted from the image using image analysis software, ImageJ. The pore regions are divided into four parts by quartering the radius of the particle using a Python script. Finally, the porosity of each part and the total porosity of the cross section of the particle are calculated using the script.

In the above-described lithium nickel composite oxide cathode material, preferably, a specific surface area of the lithium nickel composite oxide cathode material is in a range from 0.5 m²/g to 1.0 m²/g.

In the above-described lithium nickel composite oxide cathode material, preferably, the lithium nickel composite oxide cathode material includes a matrix represented by LiₐNi_{1-x-y-z}CoₓMn_{y}M_{z}O₂, and a boron coating layer coated on a surface of the matrix, wherein M represents at least one element selected from Li, Na, K, Mg, Ti, Co, Zn, Zr, Ce, and Al, 0.90≤a≤1.10, 0<x≤0.15, 0<y≤0.15, 0<z≤0.02, and x+y+z≤0.2.

In the above-described lithium nickel composite oxide cathode material, preferably, the matrix further contains sulfur element, and the sulfur element takes 0.02% to 0.2% of a total mass of the lithium nickel composite oxide cathode material.

In the above-described lithium nickel composite oxide cathode material, preferably, the boron element in the boron coating layer takes 0.05% to 0.2% of a total mass of the lithium nickel composite oxide cathode material.

As part of the overall inventive concept, the present application further provides a method for preparing the above-described lithium nickel composite oxide cathode material, which includes following steps:
(1) mixing a hydroxide of nickel, cobalt, and manganese with a sulfate containing M and multi-period low-temperature pre-sintering to obtain a pre-sintered precursor;
(2) mixing a lithium source with the pre-sintered precursor according to the stoichiometric ratio and high-temperature sintering to obtain a first sintered matrix;
(3) washing the first sintered matrix with deionized water, drying, then mixing with a coating agent and sintering to obtain the lithium nickel composite oxide cathode material.

In the above-described preparation method, preferably, in step (1), the low-temperature pre-sintering is as follows: in an air or oxygen atmosphere, heating to 150-200 °C at a rate of 3-5 °C/min, holding temperature and sintering for 1-2 hours, then heating to 300-400 °C at a rate of 1-3 °C/min, and holding temperature and sintering for 2-5 hours, followed by natural cooling to room temperature.

In the above-described preparation method, preferably, in step (2), the high-temperature sintering process is as follows: in an air or oxygen atmosphere, heating to 450-550 °C at a rate of 1-5 °C/min, holding temperature and sintering for 3-7 hours, then heating to 600-750 °C at a rate of 1-5 °C/min, and holding temperature and sintering for 8-15 hours, followed by natural cooling to room temperature.

In the above-described preparation method, preferably, in step (3), in an air or oxygen atmosphere, heating to 300-400 °C at a rate of 1-5 °C/min, holding temperature and sintering for 3-12 hours, followed by natural cooling to room temperature.

In the above-described preparation method, preferably, in step (3), the coating agent is boric acid, boron oxide, or a combination thereof.

Compared to the prior art, the advantages of the present application are as follows:
(1) In the present application, the total porosity of the cross section of the lithium nickel composite oxide cathode material is in a range from 3% to 8%. Moreover, when the cross section is divided into four equal parts according to the radial length, the porosity of each part of the cross section as measured is also in a range from 3% to 8%, indicating that abundant, uniform-sized pores are distributed evenly throughout the particle, which is beneficial for the infiltration of electrolyte, ensuring full contact between the cathode material and the electrolyte, shortening the lithium ion transport path, improving discharge capacity of the cathode material, reducing the internal resistance of the lithium battery, and enhancing rate performance of the lithium battery.
(2) In the preparation process of the lithium nickel composite oxide cathode material of the present application, by adding the metal sulfate in the pre-sintering stage, the internal porous structure formed during the pre-sintering stage can be retained after the first sintering, and the internal porous structure has a uniform distribution. As a result, abundant pores can be uniformly distributed inside the lithium nickel composite oxide cathode material, which is beneficial for improving the rate performance of the lithium battery. In contrast, a traditional hydroxide precursor may undergo dehydration during pre-sintering, forming a loose, porous oxide precursor. The loose, porous structure is difficult to be maintained after sintering and tends to be highly uneven distributed.
(3) In the preparation process of the lithium nickel composite oxide cathode material of the present application, the pre-sintering step can increase the apparent density of the precursor, thereby increasing the amount of material that can be processed in one first sintering, and there are various available metal sulfates, which are advantageous for mass production.

### BRIEF DESCRIPTION OF THE DRAWINGS

FIG. 1 is a schematic view showing four parts obtained by quartering a radius of a cross section of a particle in measuring porosity of the particle in the present application.
FIG. 2 shows an electron microscopic image of a lithium nickel composite oxide cathode material in Example 1 of the present application, taken at 20,000x magnification.
FIG. 3 shows an electron microscopic image of a lithium nickel composite oxide cathode material in Comparative Example 1 of the present application, taken at 20,000x magnification.
FIG. 4 is a graph comparing capacities of batteries assembled from lithium nickel composite oxide cathode materials in various examples and comparative examples of the present application.
FIG. 5 is a graph comparing rate performances of the batteries assembled from the lithium nickel composite oxide cathode materials in Example 1 and various comparative examples of the present application.

### DETAILED DESCRIPTION

To facilitate the understanding of the present application, the technical solutions of the present application will be described more comprehensively and specifically below in conjunction with the drawings and preferred embodiments. However, the scope of protection of the present application is not limited to the specific embodiments described below.

Unless otherwise defined, all technical terms used in the following description have meanings commonly understood by those skilled in the art. The terms used in the specification of the present application herein are for the purpose of describing specific embodiments only and are not intended to limit the scope of protection of the present application.

Unless otherwise specifically stated, raw materials, reagents, instruments, and equipment used in the present application are commercially available or prepared by conventional methods.

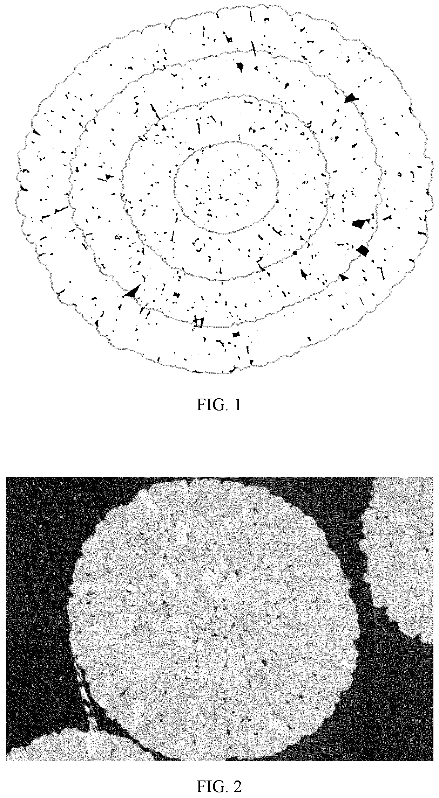

The cross-sectional image of the particles and porosity calculation in the following embodiments and comparative examples were obtained using the following method: The particle of the cathode material was cut using an ion beam polisher (CP), obtaining a sample with an observable cross-section of the particle. The image of the cross-section was captured using a scanning electron microscope (SEM). The pore regions of the particle were extracted from the image using image analysis software, ImageJ. The pore regions were divided into four parts by quartering the radius of the particle using a Python script, as shown in FIG.1. Finally, the porosity of each part and the total porosity of the cross section of the particle were calculated using the script.

### Example 1:

A cross section of a lithium nickel composite oxide cathode material of the present application was observed under a scanning electron microscope. The cross section of the lithium nickel composite oxide was divided into four equal parts according to the radial length. The porosity of the four parts was measured, which was 5.02%, 5.63%, 5.57%, and 4.82% respectively from inside to outside. The total porosity of the cross section was 5.22%. The specific surface area was 0.64 m²/g. The lithium nickel composite oxide cathode material included a matrix represented by Li_{1.03}Ni_{0.82}Co_{0.10}Mn_{0.07}Ti_{0.01}O_{2.00}. The matrix further contained sulfur element, and the mass of the sulfur element took 0.041% of the total mass of the lithium nickel composite oxide cathode material. The matrix was coated with a boron coating layer, and the boron element in the boron coating layer took 0.1% of the total mass of the lithium nickel composite oxide cathode material.

The preparation method of the lithium nickel composite oxide cathode material of the present application included the following steps:
(1) The high-nickel cathode material precursor Ni_{0.83}Co_{0.10}Mn_{0.07}(OH)₂ and Ti(SO₄)₂ at a molar ratio of 1:0.01 were mixed in a high-speed mixer. The rotation speed of the high-speed mixer was 1500 rpm/min, and the mixing was carried out for 30 minutes to obtain a mixed material. The mixed material was then placed in a sintering furnace. In an oxygen atmosphere, the mixed material was heated to 150 °C at a rate of 3 °C/min, sintered at 150 °C for 2 hours, then heated to 300 °C at a rate of 1 °C/min, sintered at 300 °C for 3 hours, and naturally cooled to room temperature to obtain a pre-sintered precursor.
(2) The pre-sintered precursor obtained in step (1) and LiOH·H₂O at a molar ratio of 1:1.03 were mixed in a high-speed mixer. The speed of the high-speed mixer was 1500 rpm/min, and the mixing was carried out for 30 minutes to obtain a mixed material. The mixed material was then placed in a sintering furnace. In an oxygen atmosphere, the mixed material was heated to 500 °C at a rate of 4°C/min, sintered at 500 °C for 6 hours, then heated to 720 °C at a rate of 1.5 °C/min, sintered at 720 °C for 12 hours, naturally cooled to room temperature, then crushed and sieved through a 300-mesh sieve to obtain a first sintered matrix.
(3) The first sintered matrix was washed with deionized water for 15 minutes at a solid-liquid ratio of 1:1, with the deionized water temperature controlled at 10 °C. After washing, the sample was placed in a vacuum oven and dried at 160 °C under vacuum for 8 hours, followed by natural cooling to room temperature and sieving through a 300-mesh sieve to obtain a washed sample. The washed sample was then mixed with boric acid at a mass ratio of 1:0.0019 in a high-speed mixer. The speed of the high-speed mixer was 1500 rpm/min, and the mixing was carried out for 30 minutes to obtain a mixed material. The mixed material was then placed in a sintering furnace. In an oxygen atmosphere, the mixed material was heated to 350 °C at a rate of 2 °C/min, sintered at 350 °C for 8 hours, naturally cooled to room temperature, and sieved through a 300-mesh sieve to obtain the lithium nickel composite oxide cathode material.

### Example 2:

A cross section of a lithium nickel composite oxide cathode material of the present application was observed under a scanning electron microscope. The cross section of the lithium nickel composite oxide was divided into four equal parts according to the radial length. The porosity of the four parts was measured, which was 4.28%, 4.56%, 5.03%, and 4.55% respectively from inside to outside. The total porosity of the cross section was 4.68%. The specific surface area was 0.75 m²/g. The lithium nickel composite oxide cathode material included a matrix represented by Li_{1.03}Ni_{0.88}Co_{0.05}Mn_{0.05}La_{0.02}O_{2.00}. The matrix further contained sulfur element, and the mass of the sulfur element took 0.036% of the total mass of the lithium nickel composite oxide cathode material. The matrix was coated with a boron coating layer, and the boron element in the boron coating layer took 0.1% of the total mass of the lithium nickel composite oxide cathode material.

The preparation method of the lithium nickel composite oxide cathode material of the present application included the following steps:
(1) The high-nickel cathode material precursor Ni_{0.90}Co_{0.05}Mn_{0.05}(OH)₂ and La₂(SO₄)₃ at a molar ratio of 1:0.01 were mixed in a high-speed mixer. The rotation speed of the high-speed mixer was 1500 rpm/min, and the mixing was carried out for 30 minutes to obtain a mixed material. The mixed material was then placed in a sintering furnace. In an oxygen atmosphere, the mixed material was heated to 150 °C at a rate of 3 °C/min, sintered at 150 °C for 2 hours, then heated to 300 °C at a rate of 1 °C/min, sintered at 300 °C for 3 hours, and naturally cooled to room temperature to obtain a pre-sintered precursor.
(2) The pre-sintered precursor and LiOH·H₂O at a molar ratio of 1:1.03 were mixed in a high-speed mixer. The speed of the high-speed mixer was 1500 rpm/min, and the mixing was carried out for 30 minutes to obtain a mixed material. The mixed material was then placed in a sintering furnace. In an oxygen atmosphere, the mixed material was heated to 520 °C at a rate of 3°C/min, sintered at 520 °C for 6 hours, then heated to 700 °C at a rate of 2 °C/min, sintered at 700 °C for 11 hours, naturally cooled to room temperature, then crushed and sieved through a 300-mesh sieve to obtain a first sintered matrix.
(3) The first sintered matrix was washed with deionized water for 15 minutes at a solid-liquid ratio of 1:1, with the deionized water temperature controlled at 10 °C. After washing, the sample was placed in a vacuum oven and dried at 160 °C under vacuum for 8 hours, followed by natural cooling to room temperature and sieving through a 300-mesh sieve to obtain a washed sample. The washed sample was then mixed with boric acid at a mass ratio of 1:0.0019 in a high-speed mixer. The speed of the high-speed mixer was 1500 rpm/min, and the mixing was carried out for 30 minutes to obtain a mixed material. The mixed material was then placed in a sintering furnace. In an oxygen atmosphere, the mixed material was heated to 350 °C at a rate of 2 °C/min, sintered at 350 °C for 5 hours, naturally cooled to room temperature, and sieved through a 300-mesh sieve to obtain the lithium nickel composite oxide cathode material.

### Example 3:

A cross section of a lithium nickel composite oxide cathode material of the present application was observed under a scanning electron microscope. The cross section of the lithium nickel composite oxide was divided into four equal parts according to the radial length. The porosity of the four parts was measured, which was 6.84%, 6.99%, 7.32%, 6.62% respectively from inside to outside. The total porosity of the cross section was 6.92%. The specific surface area was 0.86 m²/g. The lithium nickel composite oxide cathode material included a matrix represented by Li_{1.07}Ni_{0.92}Co_{0.04}Mn_{0.04}O_{2.00}. The matrix further contained sulfur element, and the mass of the sulfur element took 0.054% of the total mass of the lithium nickel composite oxide cathode material. The matrix was coated with a boron coating layer, and the boron element in the boron coating layer took 0.1% of the total mass of the lithium nickel composite oxide cathode material.

The preparation method of the lithium nickel composite oxide cathode material of the present application included the following steps:
(1) The high-nickel cathode material precursor Ni_{0.92}Co_{0.04}Mn_{0.04}(OH)₂ and Li₂SO₄ at a molar ratio of 1:0.02 were mixed in a high-speed mixer. The rotation speed of the high-speed mixer was 1500 rpm/min, and the mixing was carried out for 30 minutes to obtain a mixed material. The mixed material was then placed in a sintering furnace. In an oxygen atmosphere, the mixed material was heated to 150 °C at a rate of 3 °C/min, sintered at 150 °C for 2 hours, then heated to 300 °C at a rate of 1 °C/min, sintered at 300 °C for 3 hours, and naturally cooled to room temperature to obtain a pre-sintered precursor.
(2) The pre-sintered precursor and LiOH·H₂O at a molar ratio of 1:1.03 were mixed in a high-speed mixer. The speed of the mixer was 1500 rpm/min, and the mixing was carried out for 30 minutes to obtain a mixed material. The mixed material was then placed in a sintering furnace. In an oxygen atmosphere, the mixed material was heated to 520 °C at a rate of 3°C/min, sintered at 520 °C for 6 hours, then heated to 680 °C at a rate of 2 °C/min, sintered at 680 °C for 10 hours, naturally cooled to room temperature, then crushed and sieved through a 300-mesh sieve to obtain a first sintered matrix.
(3) The first sintered matrix was washed with deionized water for 15 minutes at a solid-liquid ratio of 1:1, with the deionized water temperature controlled at 10 °C. After washing, the sample was placed in a vacuum oven and dried at 160 °C under vacuum for 8 hours, followed by natural cooling to room temperature and sieving through a 300-mesh sieve to obtain a washed sample. The washed sample was then mixed with boric acid at a mass ratio of 1:0.0019 in a high-speed mixer. The speed of the mixer was 1500 rpm/min, and the mixing was carried out for 30 minutes to obtain a mixed material. The mixed material was then placed in a sintering furnace. In an oxygen atmosphere, the mixed material was heated to 350 °C at a rate of 2 °C/min, sintered at 350 °C for 5 hours, naturally cooled to room temperature, and sieved through a 300-mesh sieve to obtain the lithium nickel composite oxide cathode material.

### Comparative Example 1:

This comparative example was different from Example 1 in that Ti(SO₄)₂ was not added during the pre-sintering process in step (1). All other conditions and parameters were the same as in Example 1.

### Comparative Example 2:

This comparative example was different from Example 1 in that the pre-sintering in step (1) is heating to 300 °C at a rate of 1 °C/min and sintering at 300 °C for 3 hours, instead of a multi-period sintering process. All other conditions and parameters were the same as in Example 1.

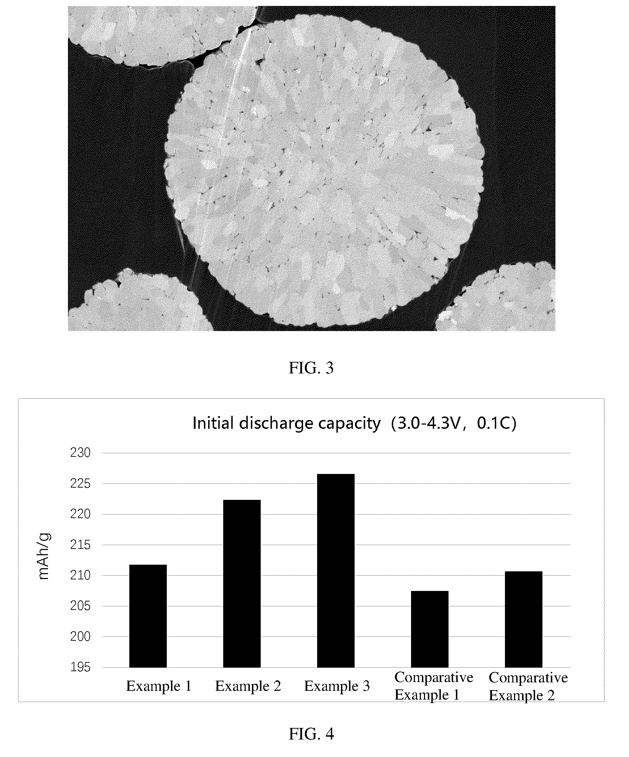

FIG. 2 shows an electron microscopic image of the lithium nickel composite oxide cathode material in Example 1 of the present application. FIG. 3 shows an electron microscopic image of the lithium nickel composite oxide cathode material in Comparative Example 1 of the present application. It can be seen from FIG. 2 that by adding a sulfate during the pre-sintering stage, the number and area of the pores are increased significantly, and the pores are distributed uniformly. In contrast, it can be seen from FIG. 3 that when no sulfate is added during the pre-sintering stage, the pores in the cross section of the particle of the obtained material have relatively small area and are distributed non-uniformly. The pores are hardly found at the inner region and center of the particle, but mostly present at the outer region of the particle.

The amount of sulfur element, specific surface area, and pore distribution of the lithium nickel composite oxide cathode materials in the examples and comparative examples are shown in Table 1.

**Table 1: The amount of sulfur element (S), specific surface area, and pore distribution of the lithium nickel composite oxide cathode materials in the examples and comparative examples**

| Name | Mass percent of S in cathode material (%) | Specific surface area (m²/g) | Total porosity of particle cross section (%) | Porosity of innermost region (%) | Porosity of second innermost region (%) | Porosity of second outermost region (%) | Porosity of outermost region (%) |
|---|---|---|---|---|---|---|---|
| Example 1 | 0.041 | 0.64 | 5.22 | 5.02 | 5.63 | 5.57 | 4.82 |
| Example 2 | 0.036 | 0.75 | 4.68 | 4.28 | 4.56 | 5.03 | 4.55 |
| Example 3 | 0.054 | 0.86 | 6.92 | 6.84 | 6.99 | 7.32 | 6.62 |
| Comparative Example 1 | 0.016 | 0.32 | 1.89 | 1.20 | 2.35 | 2.96 | 1.02 |
| Comparative Example 2 | 0.041 | 0.56 | 4.90 | 4.54 | 5.07 | 5.12 | 4.72 |

By comparing the porosity test results of Example 1 and Comparative Example 1, it can be seen that the addition of sulfate during pre-sintering can significantly increase the porosity of the material particle. By further comparing the porosity in different regions of the cross section of the particle, it can be seen that Example 1 has a more uniform pore distribution. By comparing the porosity test results of Example 1 and Comparative Example 2, it can be seen that the multi-period pre-sintering process promotes the formation of abundant pores in the material, which is beneficial for enhancing the electrical performance of the material.

The lithium nickel composite oxide cathode materials in Example 1, Example 2, Comparative Example 1, and Comparative Example 2 were respectively mixed with carbon black (Super-P) and a binder (PVDF) at a ratio of 92.5:5:2.5. After thoroughly mixing, an appropriate amount of organic solvent N-methyl-2-pyrrolidone (NMP) was added to prepare a slurry. The cathode slurry was evenly coated onto aluminum foil using a coating machine. The coated cathode plate was then placed in an air-drying oven and dried at 120 °C for 20 hours, and then cut into a circular cathode plate with a diameter of 14 mm. An anode (a lithium metal plate), an electrolyte (1 mol/L LiPF₆ dissolved in a solvent mixture of EC and DEC at a volume ratio of 1:2), a separator, and the cathode plate were assembled into a CR2032-type coin cell in a glove box for electrical performance testing. The coin cells were tested at a voltage range of 3.0 V to 4.3 V. The initial charge capacity was measured at 25 °C and a rate of 0.1 C, and the initial discharge capacity was measured at 25 °C and a rate of 0.1 C. The room-temperature cycling test was conducted at 25 °C with a charge-discharge rate of 1C/1C to evaluate capacity retention. The high-temperature cycling test was conducted at 45 °C with a charge-discharge rate of 0.5C/0.5C to evaluate capacity retention.

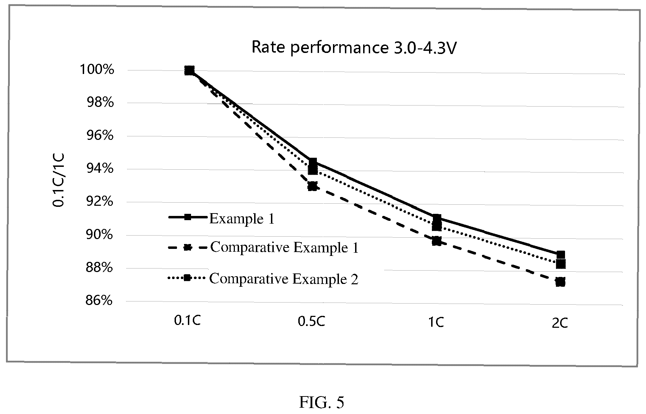

FIG. 4 is a graph comparing capacities of batteries assembled from the cathode materials in the examples and comparative examples. FIG. 5 is a graph comparing rate performances of the batteries assembled from the cathode materials in Example 1 and the comparative examples.

**Table 2: Electrochemical performance of the lithium nickel composite oxide cathode materials in the examples and comparative examples.**

| Name | Initial charge capacity (mAh/g) | Initial discharge capacity (mAh/g) | Initial Coulombic efficiency (%) | Rate performance (1C/0.1C) | Capacity retention (room temperature, 100 cls) | Capacity retention (high temperature, 100 cls) |
|---|---|---|---|---|---|---|
| Example 1 | 235.0 | 211.7 | 90.1 | 91.2% | 97.7% | 96.8% |
| Example 2 | 245.6 | 222.3 | 90.5 | 91.0% | 95.3% | 95.4% |
| Example 3 | 248.9 | 226.5 | 91.0 | 91.3% | 94.8% | 94.1% |
| Comparative Example 1 | 234.4 | 207.4 | 88.5 | 89.8% | 97.0% | 96.2% |
| Comparative Example 2 | 234.8 | 210.6 | 89.7 | 90.7% | 97.5% | 96.6% |

By comparing the electrical performance test results of Example 1 and Comparative Example 1, it can be seen that the addition of sulfate during pre-sintering can significantly improve the discharge capacity and rate performance of the material, while maintaining good capacity retention at room temperature and high temperature. By comparing the electrical performance test results of Example 1 and Comparative Example 2, it can be seen that multi-period pre-sintering further enhances the discharge capacity and rate performance of the material. Therefore, it can be concluded that the lithium nickel composite oxide cathode material of the present application demonstrates excellent discharge capacity and outstanding rate performance.

## Claims

1. A lithium nickel composite oxide cathode material, wherein under observation of a cross section through scanning electron microscopy, the cross section of the lithium nickel composite oxide cathode material is divided into four equal parts according to the radial length, and a porosity of each part of the cross section as measured is in a range from 3% to 8%, and a total porosity of the cross section is in a range from 3% to 8%.

2. The lithium nickel composite oxide cathode material according to claim 1, wherein a specific surface area of the lithium nickel composite oxide cathode material is in a range from 0.5 m²/g to 1.0 m²/g.

3. The lithium nickel composite oxide cathode material according to claim 1, comprising a matrix represented by LiₐNi_{1-x-y-z}CoₓMn_{y}M_{z}O₂, and a boron coating layer coated on a surface of the matrix, wherein M represents at least one element selected from Li, Na, K, Mg, Ti, Co, Zn, Zr, Ce, and Al, 0.90≤a≤1.10, 0<x≤0.15, 0<y≤0.15, 0<z≤0.02, and x+y+z≤0.2.

4. The lithium nickel composite oxide cathode material according to claim 3, wherein the matrix further comprises sulfur element, and the sulfur element takes 0.02% to 0.2% of a total mass of the lithium nickel composite oxide cathode material.

5. The lithium nickel composite oxide cathode material according to claim 3, wherein boron element in the boron coating layer takes 0.05% to 0.2% of a total mass of the lithium nickel composite oxide cathode material.

6. A method for preparing the lithium nickel composite oxide cathode material according to any one of claims 1 to 5, comprising:
(1) mixing a hydroxide of nickel, cobalt, and manganese with a sulfate containing M and multi-period low-temperature pre-sintering to obtain a pre-sintered precursor;
(2) mixing a lithium source with the pre-sintered precursor according to a stoichiometric ratio and high-temperature sintering to obtain a first sintered matrix;
(3) washing the first sintered matrix with deionized water, drying, then mixing with a coating agent and sintering to obtain the lithium nickel composite oxide cathode material.

7. The method according to claim 6, wherein in step (1), the multi-period low-temperature pre-sintering is: in an air or oxygen atmosphere, heating to 150-200 °C at a rate of 3-5 °C/min, holding temperature and sintering for 1-2 hours, then heating to 300-400 °C at a rate of 1-3 °C/min, and holding temperature and sintering for 2-5 hours, followed by natural cooling to room temperature.

8. The method according to claim 6, wherein in step (2), the high-temperature sintering is: in an air or oxygen atmosphere, heating to 450-550 °C at a rate of 1-5 °C/min, holding temperature and sintering for 3-7 hours, then heating to 600-750 °C at a rate of 1-5 °C/min, and holding temperature and sintering for 8-15 hours, followed by natural cooling to room temperature.

9. The method according to claim 6, wherein in step (3), the sintering is: in an air or oxygen atmosphere, heating to 300-400 °C at a rate of 1-5 °C/min, holding temperature for 3-12 hours, followed by natural cooling to room temperature.

10. The method according to claim 6, wherein in step (3), the coating agent is boric acid, boron oxide, or a combination thereof.
